# EUROPÄISCHE PATENTANMELDUNG

(11) **EP 3 456 571 A1**
(43) Veröffentlichungstag der Anmeldung: **20.03.2019**
(21) Anmeldenummer: 17191398.1
(22) Anmeldetag: 15.09.2017
(51) Int. Cl.: B60K 7/00, B60K 17/04, B60K 17/08, H02K 19/02, H02K 3/12, B60K 11/02, B60K 1/00, F16H 57/04

(54) **MINENFAHRZEUG MIT RADNABENANTRIEB**

(71) Anmelder: Siemens Aktiengesellschaft, 80333 München (DE)
(72) Erfinder: Köhler, Marco, 91233 Neunkirchen a. Sand (DE); Schramm, Marco, 90409 Nürnberg (DE); Becker, Norbert, 91341 Röttenbach (DE); Bergmann, Rainer, 91325 Adelsdorf (DE)

(57) **Zusammenfassung**

Die Erfindung betrifft ein Minenfahrzeug, insbesondere Muldenkipper (1) mit zumindest zwei elektrisch unabhängig antreibbaren Rädern (2), wobei ein Rad (2) zumindest einen Reifen (29) und einen Felgenkörper (28) aufweist, und um eine Achse (3) rotiert, wobei zumindest ein elektrischer Antriebsmotor (5) und zumindest ein Abschnitt eines Getriebes (4) im Bereich des Felgenkörpers (28) des Rades (2) angeordnet ist.

## Beschreibung

Die Erfindung betrifft ein Minenfahrzeug mit zumindest zwei elektrisch unabhängig voneinander antreibbaren Einzelrädern, wobei ein Rad zumindest einen Reifen und eine Felge aufweist, wobei das Rad um eine Achse rotiert.

Minenfahrzeuge, insbesondere Mining-Trucks, also Muldenkipper, müssen Antriebe mit einer sehr hohen Steigfähigkeit im vollbeladenen Zustand von über 20 bis 30% aufweisen. Aufgrund der festen Getriebeübersetzung ergibt sich ein sehr hohes Anfahrdrehmoment für einen Antriebsmotor, das ein entsprechend hohes Motorvolumen erfordert. Bei heckangetriebenen Muldenkippern mit Starrachse werden üblicherweise Zwillingsräder verwendet, die von einem zentralen Motor über eine Kardanwelle angetrieben werden.

Bei Schwerlastfahrzeugen ist aus der EP 2 942 223 A1 eine Antriebsachsenanordnung bekannt, bei der u.a. ein Elektro- oder Verbrennungsmotor über eine Antriebsachse ein Getriebe, das in einem Rad angeordnet ist, dieses Rad antreibt.

Aus der US 2009/0215569 A1 ist eine Anordnung mit Zwillingsreifen bekannt, bei denen ein Getriebe in einer Felge integriert ist. Ein Motor ist in einem Achstrichter außerhalb der Felge angeordnet und ist über eine Kardanwelle im Wesentlichen axial mit dem Getriebe verbunden.

Als mechanische Bremsen bei derartigen Anwendungen im Minenbereich werden aufwändige Lamellenbremsen mit separater Ölkühlung eingesetzt, die in das Getriebe integriert sind.

Ausgehend davon liegt der Erfindung die Aufgabe zugrunde, bei Schwerlastfahrzeugen, wie Minenfahrzeugen, insbesondere Muldenkippern ein Antriebskonzept vorzusehen, das vor allem bei den erforderlichen Drehmomenten von 20000 bis 25000 Nm pro Antrieb, einen raumökonomischen, kompakten Aufbau bietet und dem Fahrzeug erweiterte Bewegungsmöglichkeiten eine vergleichsweise verbesserte Wendigkeit einräumt.

Die Lösung der gestellten Aufgabe gelingt durch ein Minenfahrzeug, insbesondere einen Muldenkipper mit zumindest zwei elektrisch unabhängig antreibbaren Rädern, wobei ein Rad zumindest einen Reifen und einen Felgenkörper aufweist, und um eine Achse rotiert, wobei zumindest ein elektrischer Antriebsmotor und zumindest ein Abschnitt eines Getriebes im Bereich des Felgenkörpers des Rades angeordnet sind.

Durch die erfindungsgemäße Integration von Antriebsmotor und zumindest ein Abschnitt eines Getriebes in einen Felgenkörper eines Rades bei Minenfahrzeugen, wird eine Kompaktheit in einem Hochleistungsanwendungsspektrum geschaffen, bei gleichzeitiger Reduzierung des Gesamtgewichts des Minenfahrzeugs.

Das Rad weist dabei einen Felgenkörper auf, an dessen radial äußeren Umfang Reifen angeordnet sind. Dabei kann es sich um einen Zwillingsreifen oder einen Einzelreifen auf dem Felgenkörper handeln. Der Felgenkörper ist mit dem Reifen drehfest verbunden und ist in seinen radialen und/oder axialen Dimensionen an dem oder den Reifen ausgerichtet. Mit anderen Worten, der Felgenkörper eines Rades weist ein oder zwei Reifen auf und erstreckt sich im Wesentlichen radial bis zum Innenradius der Reifen und axial über die Reifenbreite.

Um diese Hochleistung für Minenfahrzeuge bereitstellen zu können, insbesondere die für Minenfahrzeuge erforderlichen Drehmomentanforderungen von bis zu 20000 oder 25000 Nm pro Antrieb erfüllen zu können, wird eine hochpolig permanenterregter Synchronmaschine als Antriebsmotor vorgesehen, deren Rotor Permanentmagnete aufweist. Besonders günstig ist es, wenn, abgesehen von den Flussleitblechen im Bereichs des Luftspaltes der permanenterregter Synchronmaschine, in denen die Permanentmagnete angeordnet sind, der Rotor hohl ausgeführt ist. Durch diese hohle Ausführung des Rotors wird zusätzlicher Bauraum, insbesondere im Felgenkörper bereitgestellt, der für Getriebeanordnungen, Lageranordnungen oder auch Bremsenanordnungen vorgesehen werden kann.

Der Stator der permanenterregten Synchronmaschine wird mit einem Wicklungssystem versehen, das entweder aus Zahnspulen, also Einzelzahnspulen oder einem gesehnten Wicklungssystem, aufgebaut ist. Zahnspulen haben den Vorteil, dass sie eine äußerst geringe axiale Wickelkopfausladung aufweisen und insofern für den Einbauraum radial innerhalb des Reifens, also des Felgenkörpers besonders geeignet sind. Durch die vergleichsweise geringe axiale Ausladung des Wickelkopfes verbleibt im Felgenkörper mehr Bauraum beispielsweise für Getriebeanordnungen, Lageranordnungen oder auch Bremsenanordnungen.

Um die Effizienz des Antriebs zu steigern, wird zumindest der Stator der permanenterregten Synchronmaschine mit einer Wasserkühlung versehen. Diese kann entweder am Außenumfang des Stators oder auch innerhalb des Blechpakets des Stators angeordnet sein. Vor allem bei permanenterregten Synchronmaschinen mit Zahnspulen im Stator, ist eine Wasserkühlung am Joch des Stators ausreichend. Aufgrund der vergleichsweise geringen axialen Ausladung des Wickelkopfes, bei einem Wicklungssystem mit Zahnspulen, müssen aus dem Wickelkopf vergleichsweise wenige Wärmeverluste abgeführt werden müssen. Des Weiteren sind auch aus dem Rotor, der Permanentmagnete aufweist vergleichsweise wenig Verluste abzuführen.

Die Wasserkühlung innerhalb des Felgenkörpers gestattet, die dort angeordneten unterschiedlichen anordenbaren Komponenten unterschiedlicher Temperaturgrenzen, wie Fahrmotor, Getriebe, Umrichter, Radsatzlager, Scheibenbremsen zusammen integriert zu betreiben.

Da Minenfahrzeuge in besonders staubhaltiger Umgebung unterwegs sind, ist es besonders vorteilhaft, wenn der Antrieb innerhalb des Reifens gekapselt ausgeführt ist. Dies erhöht die Zuverlässigkeit derartiger Antriebe. Vorteilhaft ist aus diesem Grund auch eine Wasserkühlung des Antriebs, da eine Luftkühlung, insbesondere eine Durchzugsbelüftung des Antriebs, vor allem des Antriebsmotors zu einer vorzeitigen Verschmutzung des Antriebs und damit letztendlich zu einem Ausfall des gesamten Minenfahrzeugs führen würde.

Die erfindungsgemäßen Antriebssysteme eignen sich aufgrund der erhöhten Zuverlässigkeit vor allem auch für fahrerlose Schwerlastantriebe bzw. Truck-Konzepte in unterschiedlichster Umgebung, da auf ein Maschinendeck auf dem Minenfahrzeug, also beispielsweise eine Fahrerkabine verzichtet werden kann und daher auch verschmutzte Luft aus dem Fahrwerksbereich angesaugt wird.

Durch die hocheffiziente permanenterregte Synchronmaschine als Antriebsmotor wird aufgrund ihrer hohen Effizienz eine höhere Radleistung bzw. Traktionsleistung bei vorgegebener Energieversorgung gewährleistet. Dadurch kann mehr Ladung beispielsweise Schüttgut pro Zeiteinheit transportiert werden.

Ebenso eignet sich das erfindungsgemäße Antriebskonzept auch für Allradantriebe bei Minenfahrzeugen gegebenenfalls sogar mit einzeln lenkbaren Rädern, die gegebenenfalls an einem Fahrzeugrahmen abgefedert sind. Dies führt zu einer weiteren Erhöhung der Beweglichkeit und verbesserten Wendigkeit des Minenfahrzeugs.

Der nunmehr gewonnene Platz im Achsgehäuse, also in dem Bereich zwischen den Rädern einer Achse, steht jetzt anderen Komponenten, beispielsweise Batterien für die elektrische Versorgung des Antriebs und/oder Umrichtern für den Antriebsmotor zur Verfügung. Es entfallen außerdem bisher eingesetzte Kardanwellen zwischen Antriebsmotor und Getriebe. Außerdem entfallen eine Auslegung des Antriebsmotors auf hohe Kurzschlussmomente und eine damit verbundene korrektive und präventive Wartung des Antriebs.

Des Weiteren kann durch die kompakte Ausführung auch eine vergleichsweise einfache Scheibenbremse mit in den Felgenkörper eines Rades integriert oder aber zwischen einem Achskörper und dem Felgenkörper angeordnet werden.

Als Getriebe eignet sich je nach Ausführung ein-, zwei- oder mehrstufige Planetengetriebe, dies hängt unter anderem auch von der Auswahl des permanenterregten Synchronmotors ab. Pauschal kann davon ausgegangen werden, dass eine höherpolige Synchronmaschine gegebenenfalls nur eine Getriebestufe aufweist, die dann auch innerhalb des Felgenkörpers angeordnet wird.

Das Getriebe hat dabei die grundsätzliche Aufgabe die motorgetriebene Rotation in eine insbesondere langsamere Drehung der Räder (als die des Antriebsmotors) zu übersetzen.

Durch Einsatz der permanenterregten Synchronmaschine wird eine Energierückgewinnung, also elektrisches Bremsen eines Minenfahrzeugs z.B. bei Bergabfahrt begünstigt, insbesondere wenn sich elektrische Speicher wie Supercaps und/oder Batterien mit "an Bord" des Minenfahrzeugs befinden.

Um die hohe Integration in einem Felgenkörper zu ermöglichen, ist eine demensprechende Tragstruktur erforderlich, an der sich zumindest einer der Komponenten eines Rades wie Fahrmotor, Getriebe oder Radsatzlager abstützt.

Die Erfindung sowie vorteilhafte Ausgestaltungen der Erfindung werden anhand mehrerer prinzipiell dargestellter Ausführungsbeispiele näher erläutert. Darin zeigen:
- FIG 1: einen Muldenkipper,
- FIG 2 bis 6: eine Antriebseinheit in einem Rad,
- FIG 7: einen prinzipiellen Antriebsmotor,
- FIG 8: einen Teilquerschnitt eines Stators,
- FIG 9 und 10: einen Teilquerschnitt unterschiedlicher Rotoren.

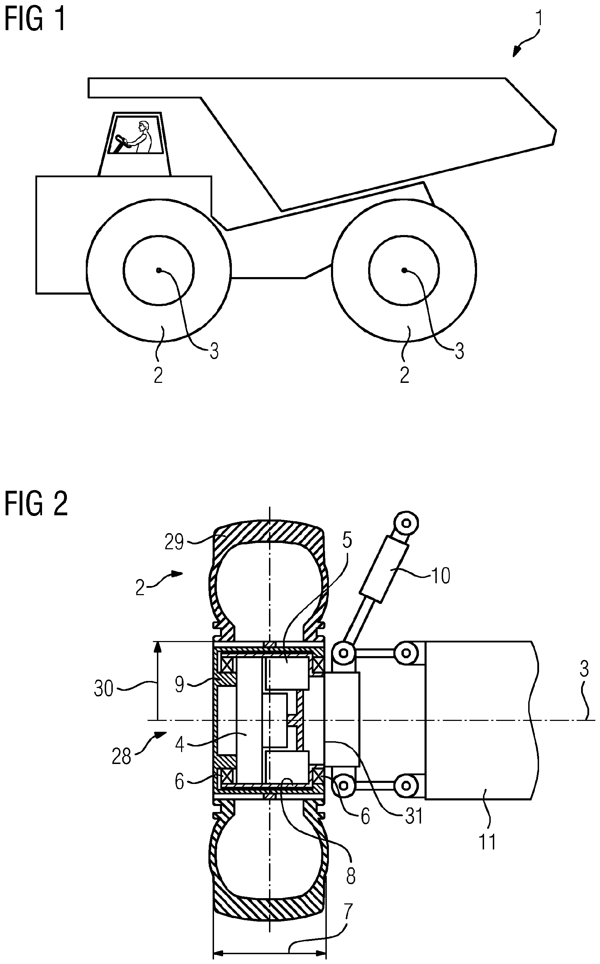

FIG 1 zeigt in Seitenansicht ein Beispiel eines Minenfahrzeugs in Form eines Muldenkippers 1. Dabei ist im vorderen Bereich und im hinteren Bereich jeweils ein Radsatz vorgesehen, mit jeweils einem Rad 2, das sich an der Außenseite des Fahrzeugs befindet. Insbesondere im hinteren Teil des Fahrzeugs sind auch Zwillingsreifen vorgesehen, so dass ein Radsatz in diesem Fall vier Reifen aufweist. Die Räder 2 drehen sich jeweils um eine Achse 3.

Ein Rad 2 weist dabei einen Felgenkörper 28 auf, an dessen radial äußeren Umfang Reifen 29 angeordnet sind. Dabei kann es sich um einen Zwillingsreifen oder einen Einzelreifen auf dem Felgenkörper 28 handeln. Der Felgenkörper 28 ist mit dem Reifen 29 drehfest verbunden und ist in seinen radialen und/oder axialen Dimensionen an dem oder den Reifen 29 ausgerichtet. Mit anderen Worten, der Felgenkörper 28 eines Rades 2 weist ein oder zwei Reifen 29 auf und erstreckt sich im Wesentlichen radial maximal bis zum Innenradius 31 der Reifen 29 und axial maximal über die Reifenbreite 7.

Durch elektromagnetische Wechselwirkung eines bestromten Stators 23 mit einem Rotor 19 mit Permanentmagneten 20 wird dabei grundsätzlich eine Drehung des Rotors 19 um die Achse 3 generiert. Damit wird über ein Getriebe 4, das ein-, zwei-, oder mehrstufig ausgeführt ist, der Felgenkörper 28, damit der Reifen 29 und damit letztlich das gesamte Rad 2 und damit der Muldenkipper 1 angetrieben.

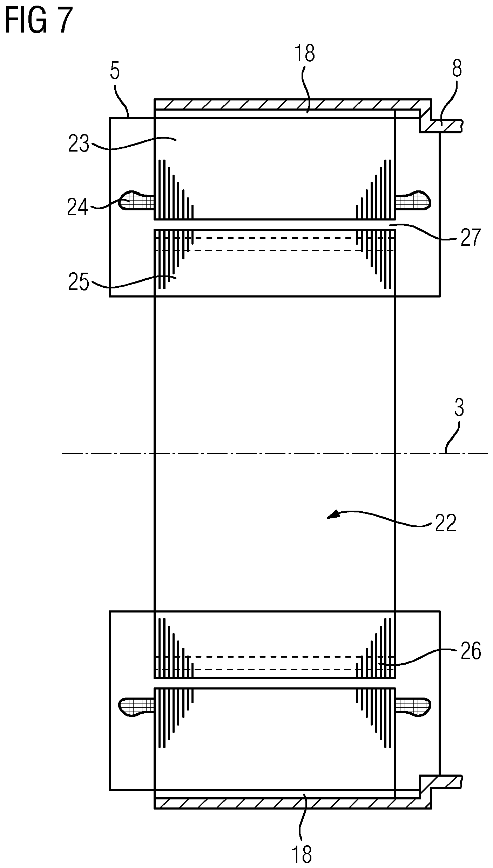

Bei den FIG 2 bis 6 sind sowohl die Getriebe 4, als auch die Antriebsmotoren 5 nur prinzipiell dargestellt. Beispielsweise ist in FIG 2 der Antriebsmotor 5 mit zwei "Kästchen" dargestellt. Es handelt sich aber nur um einen Antriebsmotor 5, der gemäß FIG 7 dargestellt ist. Es sind dabei im Längsschnitt Stator 23 und Rotor 19 "zusammengefasst". Die Antriebsmotoren 5 zeigen in den FIG 2 bis FIG 7 deshalb keinen Luftspalt 27 zwischen Stator 23 und Rotor 19, wie er in FIG 7 dargestellt ist.

Außerdem ist grundsätzlich das Antriebssystem im Felgenkörper 28 mit einer Kapselung 31 versehen, die u.a. Schmutz vom Antriebssystem abhalten soll und ggf. einen abgeschlossenen Raum für einen internen Luftkühlkreislauf innerhalb des Felgenkörpers 28 bildet. Dieser interne Luftkühlkreislauf wird durch nicht näher dargestellte Lüfter aufrechterhalten und sorgt für eine vergleichmäßigte Temperaturverteilung innerhalb des Felgenkörper 28.

FIG 2 zeigt in einem Teilquerschnitt eine Antriebseinheit mit einem Antriebsmotor 5 und einem Getriebe 4, ebenso wie Radsatzlagern 6 in dem Felgenkörper 28. Antriebsmotor 5 und Getriebe 4 sind axial betrachtet zwischen den Radsatzlagern 6 dieses Rades 2 angeordnet. In diesem Raum des Felgenkörpers 28 befindet sich nunmehr eine permanenterregte Synchronmaschine 5, deren Rotor 25 hohl ausgeführt ist, so dass dort zumindest eine erste Stufe eines Getriebes 4, insbesondere eines Planetengetriebes angeordnet werden kann.

Der Stator 23 des Antriebsmotors 5 ist in einer feststehenden Halterung 8, die auch als feststehende Glocke bezeichnet wird, angeordnet. Der Antrieb der ersten oder einzigen Stufe des Planetengetriebes erfolgt über die Sonne, der Abtrieb über den Planententräger. Ein Hohlrad der ersten oder einzigen Stufe des Planetengetriebes ist an einem feststehenden Motorlagerschild fixiert. Eine gegebenenfalls zweite Stufe ist der ersten Stufe des Planetengetriebes vergleichbar aufgebaut. Der Antrieb erfolgt dabei wieder über die Sonne und der Abtrieb über den Planetenträger des Planentengetriebes. Das Hohlrad wird dabei jeweils durch eine feststehende Halterung 8 bzw. der Glocke gehalten. Die Planetenträger werden mit einer rotierenden Halterung 9 oder auch rotierende Glocke bezeichnet verbunden, die das erforderliche Drehmoment an den Felgenkörper 28 und damit den Reifen 29 weitergibt.

Axial zwischen den beiden Halterungen 8, 9 sind Radsatzlager 6 angeordnet. Diese Radsatzlager 6 müssen aufgrund der vorgesehenen Bauweise einen ausreichend großen Durchmesser aufweisen. Der Durchmesser muss radial größer sein als der Abtrieb des Getriebes 4. Da die Radsatzlager 6 axial neben dem Antriebsmotor 5 und dem Getriebe 4 angeordnet sind, wird jedoch der Durchmesser der Radsatzlager 6 nicht vom Antriebsmotor- oder Getriebeaußendurchmesser festgelegt. Es können daher vergleichsweise kleinere und damit günstigere Radsatzlager 6 eingesetzt werden, wie dies beispielsweise den folgenden Ausführungsbeispielen zu entnehmen ist.

Der Antrieb des Rades 2 erfolgt nunmehr über den Antriebsmotor 5 durch Drehung des Rotors 19, der das Drehmoment über das Planetengetriebe 4 über eine oder zwei Stufen an die rotierende Halterung 9 weitergibt, die mit dem Reifen 29 drehfest verbunden ist.

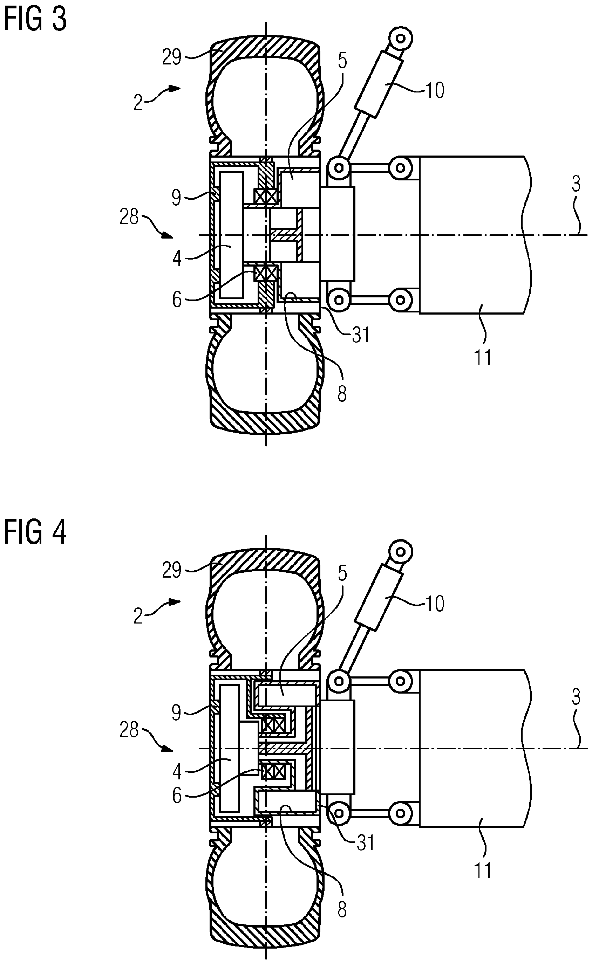

FIG 3 zeigt eine Ausführung, die, ergänzend zu den oberen Erläuterungen die Radsatzlager 6 axial zwischen Antriebsmotor 5 und Getriebe 4 zeigt. Auch hier gibt es eine feststehende und eine rotierende Halterung 8,9 zwischen denen sich die Radsatzlager 6 befinden. Der Durchmesser der Radsatzlager 6 in dieser Ausführung kann kleiner und damit kostengünstiger ausfallen. Die axiale Baulänge des Antriebsmotors 5 und damit die zu erwartende Performance des Antriebs wird gegebenenfalls dadurch etwas eingeschränkt, da die Anordnungen der Radsatzlager 6 gemäß dieser Ausführung etwas Bauraum-intensiver sind.

FIG 4 zeigt in Ergänzung zu den bestehenden Ausführungen die Radsatzlager 6 im Hohlraum 22 des Rotors 19, also radial innerhalb des Antriebsmotors 5 bzw. des Rotors 19. Auch hier sind die Radsatzlager 6 vergleichsweise klein und damit kostengünstig gestaltet. Ebenfalls sind hier eine feststehende 8 und eine rotierende 9 Halterung vorgesehen. Die radiale Bauhöhe des Antriebsmotors 5 bzw. der elektromagnetisch aktiven Komponenten von Stator 23 und Rotor 19 ist hier im Vergleich zur vorherigen Ausführung gemäß FIG 3 geringer. Jedoch kann hier letztlich die axiale Ausdehnung von Stator 23 und Rotor 19 großzügiger gestaltet werden, was zu einer größeren Fläche des aktiven Luftspaltes 27 bzw. dessen Fläche des Antriebsmotors 5 führt. Es kann damit eine vergleichsweise höhere Drehmomentenleistung des Antriebsmotors 5 zur Verfügung gestellt werden.

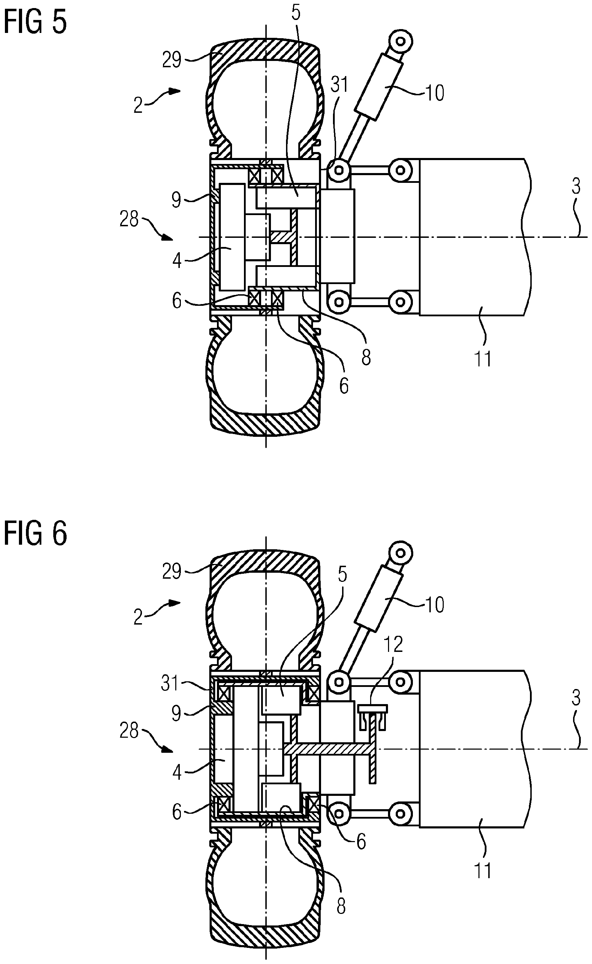

Gemäß FIG 5 sind nun die Radsatzlager 6 radial um den Antriebsmotor 5 und das Getriebe 4 angeordnet. Die beiden Halterungen (feststehend 8), (rotierend 9) weisen eine vergleichsweise einfache Struktur, zumindest abschnittsweise ineinandergreifende Struktur auf, jedoch müssen hier die Radsatzlager 6 mit einem vergleichsweise großen Durchmesser ausgeführt werden.

Gemäß FIG 6 ist in axialer Richtung, in Richtung eines Achskörpers 11 eine Scheibenbremse 12 vorgesehen. Dies ist nunmehr möglich, da im Gegensatz zum zitierten Stand der Technik keine Kardanwelle notwendig ist, die diesen Platz beansprucht. Eine wie auch immer ausgeführte Bremse ist an diesem Bauort vergleichsweise gut von Luft umströmt, d.h. die Abwärme dieser Bremse, insbesondere Scheibenbremse 12 kann einfach abgegeben werden. Aufwändige Bremsen, wie in einem Getriebe integrierte Lamellenbremsen mit eigenem Kühlkreislauf sind nunmehr nicht mehr notwendig.

Grundsätzlich ist die Antriebseinheit in dem Felgenkörper 28 durch zumindest einen Achskörper 11 an einem Fahrzeugrahmen gehalten, der die Antriebseinheit auch über Achsschenkel 10 abstützt.

Grundsätzlich unabhängig von den oben beschriebenen Ausführungsformen können dabei im Achskörper 11 nunmehr optional weitere für den Antrieb notwendige Komponenten, wie Batterien, Umrichter etc. angeordnet werden.

FIG 7 zeigt in prinzipieller Darstellung einen Antriebsmotor 5 mit seinem Stator 23, wobei in dem Stator 23 zu einem achsparallelen Luftspalt 27 gewandt, ein Wicklungssystem 17 in nicht näher dargestellten Nuten vorgesehen ist, das durch elektromagnetische Wechselwirkung mit einem Rotor 19 und dessen Permanentmagneten 20 eine Drehung des Rotors 19 um eine Achse 3 bewirkt. Ebenso ist in FIG 7 eine feststehende Halterung 8 angedeutet, über die sich der Stator 23 am Fahrzeugrahmen abstützt. Zwischen Stator 23 und der Halterung 8 oder auch im Stator 23 selbst ist dabei eine Flüssigkeitskühlung vorgesehen, die als Kühlmantel 18 und/oder durch einzelne Rohre im Blechpaket des Stators 23 umgesetzt werden kann.

Es kann dort ebenso ein permanenterregter Synchronmotor mit Scheibenläufer vorgesehen werden, dabei verläuft der Luftspalt konstruktionsbedingt senkrecht zur Achse 3. Damit lassen sich weitere Anordnungen von Getrieben, Lagern oder auch Bremsenanordnungen umsetzen.

Durch elektromagnetische Wechselwirkung des bestromten Stators 23 über einen Luftspalt 27 mit dem Rotor 19, der mit Permanentmagneten 20 bestückt ist, wird dabei grundsätzlich eine Drehung des Rotors 19 um die Achse 3 generiert. Damit wird über das Getriebe 4, das ein- oder mehrstufig ausgeführt ist, die rotierende Halterung 9, des ein- oder mehrstufigen Getriebes 4 in dem Felgenkörper 28, damit der Reifen 29 und damit letztlich das gesamte Rad 2 des Muldenkippers 1 angetrieben.

Der Rotor 19 ist hohl ausgeführt, um in diesem Hohlraum 22 diverse Komponenten aufnehmen zu können. Dies sind beispielsweise andere Antriebselemente wie ganze Getriebe 4 oder zumindest Getriebestufen, Radsatzlager 6, Bremsen etc.

Lediglich im radial äußeren Bereich des Rotors 19 sind Flussleitbereiche - also zum Beispiel Bleche - vorgesehen, um den Magnetfluss u.a. der Permanentmagnete 20 zu führen, die in im Wesentlichen axial verlaufenden Magnettaschen 26 angeordnet sind.

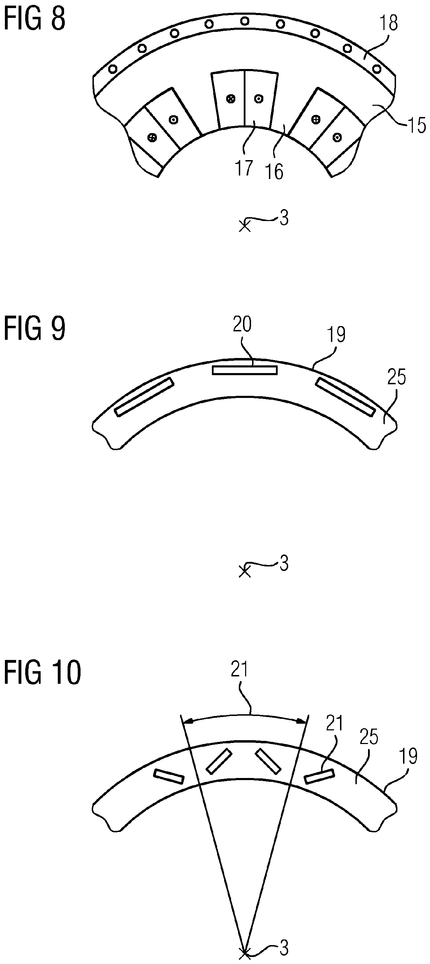

In einem prinzipiellen Teilquerschnitt des Stators 23 nach FIG 8 wird ein Wicklungssystem mit Zahnspulen 17 gezeigt, wobei jede Zahnspule 17 um einen Zahn 16 positioniert ist. In einer Nut befinden sich somit zwei Spulenseiten unterschiedlicher Zahnspulen 17. Der Stator 23 ist in axialer Richtung durch einzelne axial geschichtete Bleche aufgebaut, die ein Statorjoch 15 bilden. In dieser Darstellung angedeutet ist ein Kühlmantel 18, der achsparallele Kühlrohre aufweist. Es sind jedoch auch mäandernde Kühlrohre im Kühlmantel vorstellbar.

FIG 9 und FIG 10 zeigen jeweils unterschiedliche Rotorausführungen, wobei beiden Rotorausführungen gemein ist, dass sie einen Hohlraum 22 um die Achse 3 bilden, in dem andere Antriebselemente wie Getriebe oder einzelne Getriebestufen, Radsatzlager 6, Bremsen etc. angeordnet werden können. Zum anderen handelt sich jeweils um vergrabene Permanentmagnete 20, die in im Wesentlichen axial verlaufenden Ausnehmungen bzw. Magnettaschen 26 der Flussleitbereiche 25 (z.B. Bleche) des Rotors 19 angeordnet sind.

Dabei zeigt FIG 9 eine Anordnung, bei der die Permanentmagnete 20 in Ausnehmungen eines axial gestapelten Blechpakets des Rotors 19 mehr oder weniger tangential bzgl. der Achse 3 angeordnet sind.

FIG 10 zeigt einen Rotor 19, bei dem die Permanentmagnete 20 pro Pol 21 mehr oder weniger in V-Anordnung in dem Flussleitbereich 25 angeordnet sind. Dies führt im Luftspalt 27 der permanenterregten Synchronmaschine zu einer vergleichsweise hohen Flussdichte, was die Leistungsfähigkeit dieser Maschine weiter steigert.

Die Erfindung schafft somit vor allem bei Antrieben von Schwerlastfahrzeuge, wie sie beispielsweise bei Minenfahrzeugen eingesetzt werden einen raumökonomischen, kompakten Aufbau, der erweiterte Bewegungsmöglichkeiten des Fahrzeugs beispielsweise bei der Lenkung oder Wendigkeit aufgrund seiner dezentralen Antriebe in der Radnabe, also im Felgenkörper 28 der Reifen 29 zulässt. Neben den erwähnten Antriebsmotoren sind auch Scheibenmotoren vorstellbar.

Die Erfindung stellt somit für Schwerlastfahrzeuge kompakt und integrierte Antriebssysteme zur Verfügung, die aufgrund ihrer Anordnung in dem Felgenkörper 28 auch als Radnabenantriebe bezeichnet werden können.

## Patentansprüche

1. Minenfahrzeug, insbesondere Muldenkipper (1) mit zumindest zwei elektrisch unabhängig antreibbaren Rädern (2), wobei ein Rad (2) zumindest einen Reifen (29) und einen Felgenkörper (28) aufweist, und um eine Achse (3) rotiert, wobei zumindest ein elektrischer Antriebsmotor (5) und zumindest ein Abschnitt eines Getriebes (4) im Bereich des Felgenkörpers (28) des Rades (2) angeordnet ist.

2. Minenfahrzeug nach Anspruch 1, **dadurch ge- kennzeichnet,** dass der Antriebsmotor (5) als hochpoliger permanenterregter Synchronmaschine mit einer Polzahl 6, 8, 12, 16 oder mehr ausgeführt ist.

3. Minenfahrzeug nach Anspruch 2, **dadurch ge** - **kennzeichnet,** dass das Wicklungssystem der permanenterregten Synchronmaschine Einzelzahnspulen (17) aufweist.

4. Minenfahrzeug nach Anspruch 1, **dadurch ge** - **kennzeichnet**, dass das Wicklungssystem des Antriebsmotors (5) als gesehnte Wicklung mit einer Spulenweite von zwei oder mehr Nuten ausgeführt ist.

5. Minenfahrzeug nach einem der vorhergehenden Ansprüche, **dadurch gekennzeichnet , dass** der Antriebsmotor (5) eine Flüssigkeitskühlung (18) aufweist,

6. Minenfahrzeug nach Anspruch 5, **dadurch ge** - **kennzeichnet,** dass zumindest ein Stator (23) des Antriebsmotors (5) an seiner radial äußeren Begrenzungsfläche einen Kühlmantel (18) aufweist.

7. Minenfahrzeug nach einem der vorhergehenden Ansprüche, **dadurch gekennzeichnet , dass** eine Kapselung (31) des Felgenkörpers (28) zumindest den Antriebsmotor (5) und zumindest ein Teil eines Getriebes (4) umschließt.

8. Minenfahrzeug nach einem der vorhergehenden Ansprüche, **dadurch gekennzeichnet , dass** sich in axialer Verlängerung ausgehend von einem Achskörper (11), der sich zwischen zwei Rädern (2) einer Achse befindet, zumindest eine Bremse, insbesondere Scheibenbremse (12) zwischen Achskörper (11) und Felgenkörper (28) befindet.

9. Minenfahrzeug nach einem der vorhergehenden Ansprüche, **dadurch gekennzeichnet , dass** der Stator (23) des Antriebsmotors (5) radial innerhalb des Reifens (29) durch eine feststehende Halterung (8) drehfest gehalten ist.

10. Minenfahrzeug nach einem der vorhergehenden Ansprüche, **dadurch gekennzeichnet , dass** das Getriebe (4) als ein- oder zwei- oder mehrstufiges stufiges Planetengetriebe ausgeführt ist, wobei zumindest eine erste Getriebestufe radial innerhalb eines Rotors (19) des Antriebsmotors (5) integriert ist.

11. Minenfahrzeug nach einem der vorhergehenden Ansprüche, **dadurch gekennzeichnet , dass** sich Radsatzlager (6) radial innerhalb des Reifens (29), insbesondere zumindest ein Radsatzlager (6) innerhalb des Rotors (19) befinden.
